# EUROPEAN PATENT APPLICATION

(11) **EP 4 806 722 A1**
(43) Date of publication of application: **16.09.2026**
(21) Application number: 25163050.5
(22) Date of filing: 11.03.2025
(51) Int. Cl.: B60Q 3/60, B60Q 3/76, B60Q 3/85

(54) **PROJECTOR LAMP UNIT FOR A VEHICLE**

(71) Applicant: Volvo Car Corporation, 405 31 Göteborg (SE)
(72) Inventor: Perez Barrera, Oswaldo, SE-405 31 Göteborg (SE); Morales, Gerardo, SE-405 31 Göteborg (SE)
(74) Representative: Nederlandsch Octrooibureau

(57) **Abstract**

A method to control a projector lamp unit (100) to display a pattern inside of a vehicle, wherein the method comprises obtaining (1402) vehicle user preferences, and controlling (1404) the projector lamp unit (100) to display the pattern based on the vehicle user preferences, wherein the vehicle user preferences comprise information indicating at least one of an identifier of the pattern to be displayed, a displaying speed of the pattern to be displayed, a displaying time of the pattern to be displayed, and a displaying colour of the pattern to be displayed.

## Description

### Technical Field

The current disclosure relates to a method to control a projector lamp unit. The disclosure also relates to a projector lamp unit and a vehicle comprising the projector lamp unit.

### Background Art

A micro-optical projection system enables a homogeneous, efficient, and high-quality graphic projection of a customized graphic allowing inclined projection angles and small package space. The strong miniaturization enables the application of such micro projection units under difficult installation conditions. These projection systems use collimators, which are devices for changing the diverging light or other radiation from a point source into a parallel beam.

### Summary

According to a first aspect of the disclosure, a method to control a projector lamp unit to display a pattern inside of a vehicle is provided, wherein the method comprises obtaining vehicle user preferences, and controlling the projector lamp unit to display the pattern based on the vehicle user preferences, wherein the vehicle user preferences comprise information indicating at least one of an identifier of the pattern to be displayed, a displaying speed of the pattern to be displayed, a displaying time of the pattern to be displayed, and a displaying colour of the pattern to be displayed.

Obtaining the vehicle user preferences may comprise identifying a user of the vehicle and wherein the vehicle user preferences correspond to the identified user.

The vehicle user may be identified based on a signal received from a mobile device and/or based on an image of the user obtained from a camera inside of the vehicle and/or based on an input from the vehicle user.

The vehicle user preferences may be obtained through a user interface and/or from a memory.

The projector lamp unit may comprise a first light source, a first image carrier, and a first projection lens, wherein the first light source may be arranged to emit light beams through an area of the first image carrier and to the first projection lens whereby a pattern inside the vehicle is projected, wherein the first image carrier may be movable with respect to the first light source and wherein controlling the projector lamp unit based on the vehicle user preferences may comprise controlling the first image carrier to move based on the vehicle user preferences.

The projector lamp unit may comprise a second light source, a second image carrier, and a second projection lens, wherein the second light source may be arranged to emit light beams through an area of the second image carrier and to the second projection lens whereby a pattern inside the vehicle is projected, wherein the second image carrier may be movable with respect to the second light source, wherein the first image carrier and the second image carrier may be engaged such that movement of the first image carrier is transmitted to the second image carrier.

The projector lamp unit may further comprise a motor and wherein controlling the first image carrier to move comprises controlling the motor to cause the first image carrier to move.

The first image carrier may have a circular shape divided in a plurality of areas and each of the plurality of areas corresponds to a different pattern theme, and wherein controlling the first image carrier to move based on the vehicle user preferences may comprise at least one of controlling the first image carrier to rotate at the displaying speed, to rotate for the displaying time, to change a rotation direction, to control the colour of the first light source to emit light based on the displaying colour or to rotate a certain amount of degrees according to the identifier of the pattern to be selected.

According to another aspect of the disclosure, a control unit for a vehicle is provided, the control unit being configured to obtain user preferences, and control a projector lamp unit to display a pattern inside of the vehicle based on the vehicle user preferences, wherein the vehicle user preferences comprise information indicating at least one of an identifier of the pattern to be displayed, a displaying speed of the pattern to be displayed, a displaying time of the pattern to be displayed, and a displaying colour of the pattern to be displayed.

The control unit may be further configured to perform any of the operations of the method above described.

According to a further aspect of the disclosure, a projector lamp unit for a vehicle interior is provided, the projector lamp unit comprising a first light source, a first image carrier, a first projection lens, wherein the first light source is arranged to emit light beams through an area of the first image carrier and to the first projection lens whereby the pattern inside the vehicle is projected, a motor arranged to move at least one of the first light source and the first image carrier such that light beams from the first light source pass through the area of the first image carrier, and the control unit previously described.

The projector lamp unit may further comprise a second light source, a second image carrier, and a second projection lens, wherein the second light source may be arranged to emit light beams through an area of the second image carrier and to the second projection lens whereby the pattern inside the vehicle is projected, wherein the second image carrier may be movable with respect to the second light source, wherein the first image carrier and the second image carrier are engaged such that movement of the first image carrier is transmitted to the second image carrier.

The projector lamp may further comprise first and second image carrier supporters, the first image carrier supporter comprising a first and a second gear wheel with the first image carrier being enclosed between the first and the second gear wheels, the second image carrier supporter comprising a third and a fourth gear wheel with the second image carrier being enclosed between the third and the fourth gear wheels, and wherein each of the first, second, third and fourth gear wheel comprises a series of recesses in an outer surface thereby defining a rim of teeth such that the teeth of the first and second gear wheels respectively engage with the teeth of the third and fourth gear wheels, such that rotation of the first and second gear wheels cause rotation of the third and fourth gear wheels. As is generally known for the skilled person, the indentations, also known as recesses, depressions, or teeth, of a gear wheel are formed by what is generally referred to as addendum and dedendum, wherein the addendum generally is defined as the distance from the pitch circle of the gear wheel to the tooth tip, and the dedendum generally is defined as the distance between the pitch circle to the root of the gear wheel. This allows for the proper meshing of gear wheels by providing clearance for the teeth of the mating wheels.

According to another aspect of the disclosure, it is provided a vehicle comprising a projector lamp unit as described above.

According to a further aspect of the disclosure, it is provided a projector lamp unit comprising a first light source, a first image carrier, and a first projection lens, wherein the first light source may be arranged to emit light beams through an area of the first image carrier and to the first projection lens whereby the pattern inside the vehicle is projected, wherein the first image carrier may be movable with respect to the first light source, the projector lamp unit further comprising a second light source, a second image carrier, and a second projection lens, wherein the second light source may be arranged to emit light beams through an area of the second image carrier and to the second projection lens whereby the pattern inside the vehicle is projected, wherein the second image carrier may be movable with respect to the second light source, wherein the first image carrier and the second image carrier may be engaged such that movement of the first image carrier is transmitted to the second image carrier.

### Brief Description of Drawings

Fig. 1A illustrates a projector lamp unit according to the present disclosure.
Fig. 1B shows a schematic front view of the projector lamp unit of Fig. 1A without housing.
Fig. 1C shows schematically the projector lamp unit of Fig. 1A in a disassembly state.
Figs. 2A-2E show schematically several views of the housing of the projector lamp unit of Fig. 1A.
Fig. 3 shows further details of the printed circuit board 120 shown in Fig. 1C.
Figs. 4A-B show further details of the holder cover 130 shown in Fig. 1C.
Fig. 5 shows further details of the collimator 140 shown in Fig. 1C.
Figs. 6A-B show further details of the holder 150 shown in Fig. 1C.
Figs. 7A-B show further details of the lenses 160 shown in Fig. 1C.
Figs. 8A-B show further details of the roof bracket 170 shown in Fig. 1C.
Fig. 9 shows further details of the flexible printed circuit 180 shown in Fig. 1C.
Figs. 10A-C show further details of the image carrier supporters and the image carriers shown in Fig. 1C.
Figs. 11A-11Q shows how to mount the projector lamp unit of Fig. 1A.
Figs. 12A-12D show image carriers according to embodiments of the disclosure.
Fig. 13 shows a flowchart of a method according to an embodiment of the disclosure.

### Description of Embodiments

The following is a description of certain embodiments of the present disclosure, given by way of example only and with reference to the figures

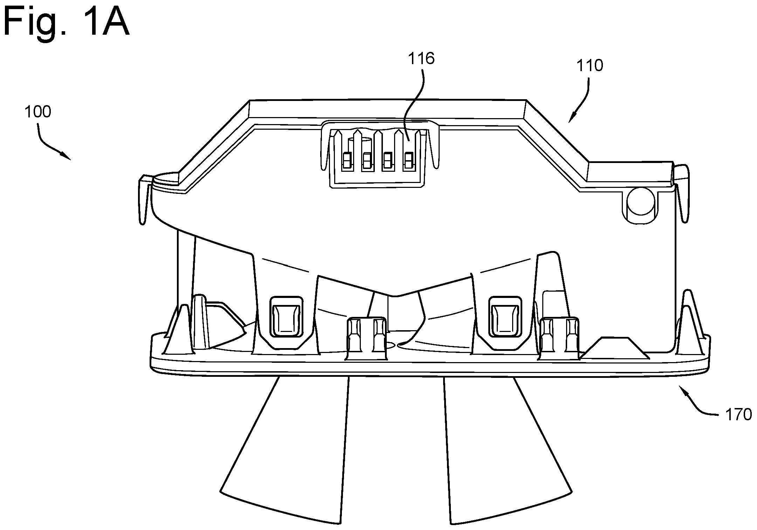

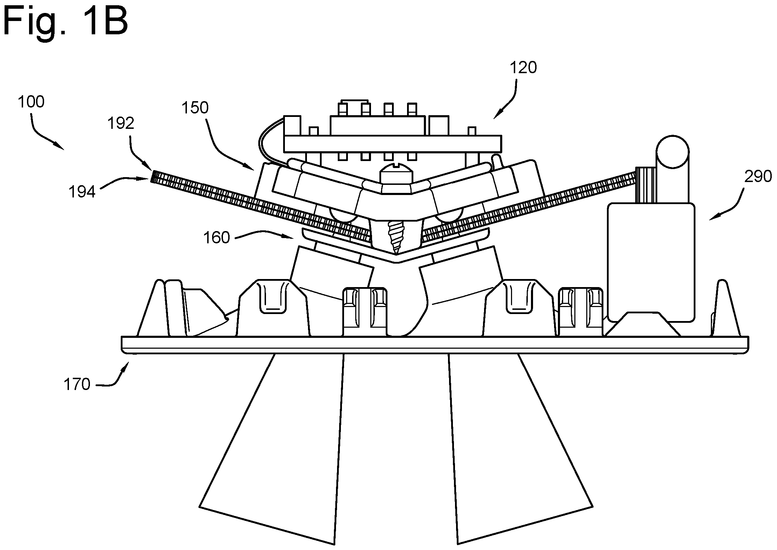

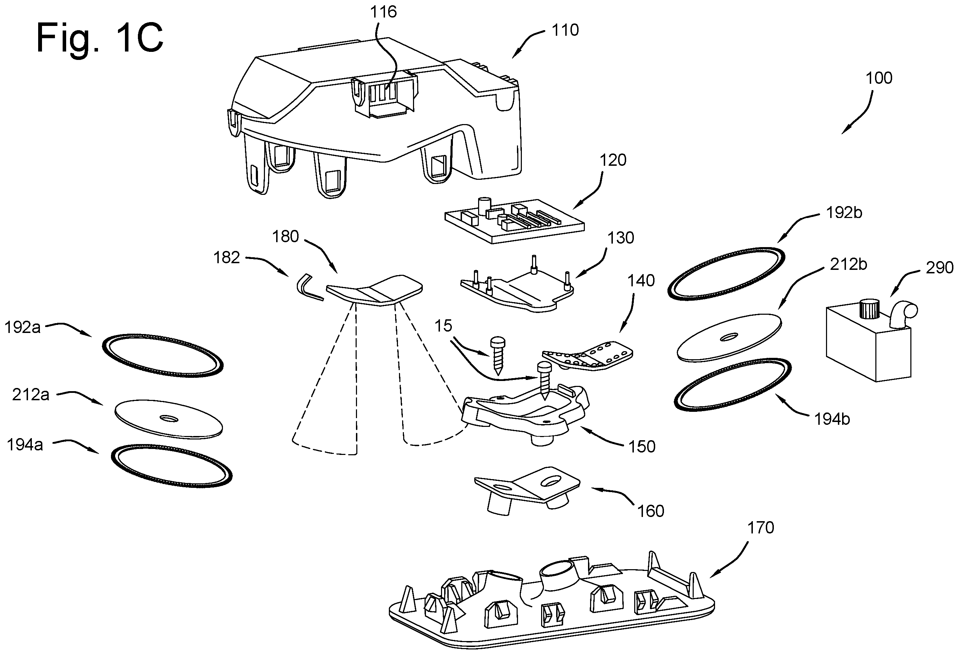

Fig. 1A illustrates a projector lamp unit 100 according to the present disclosure, Fig. 1B shows a schematic front view of the projector lamp unit 100 of Fig. 1A without housing, and Fig. 1C shows schematically the projector lamp unit 100 of Fig. 1A in a disassembly state.

As shown in Figs. 1B-1Che projector lamp unit 100 of Figs. 1A-C comprises a housing 110, a Printed Circuit Board (PCB) 120, a holder cover 130, a collimator 140, a holder 150, a lens system 160, a roof bracket 170, a Flexible Printed Circuit (FPC) 180 and a motor 290.

The projector lamp unit 100 of Figs. 1A-C further comprises a first image carrier supporter comprising a first gear wheel 192a and a second gear wheel 194a, and a second image carrier supporter comprising a third gear wheel 192b and a fourth gear wheel 194b as shown in Figs. 1B-1C.

In Figs. 1B-1C, the projector lamp unit 100 is shown together with a first image carrier 212a and a second image carrier 212b. As also can be appreciated from Figs. 1B-1C, the first image carrier 212a is placed between the first 192a and the second gear wheel 194a of the first carrier supporter, and the second image carrier 212b is placed between the third 192b and the fourth gear wheel 194b of the second carrier supporter.

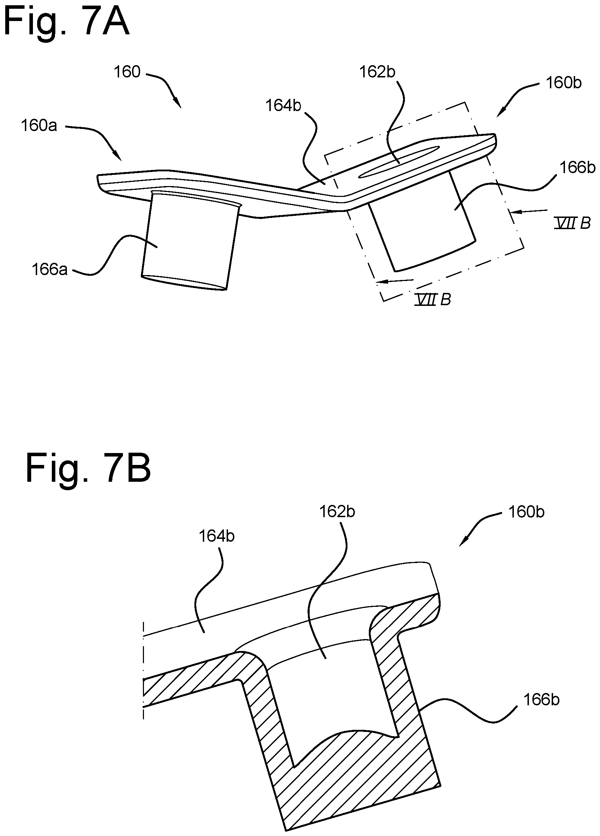

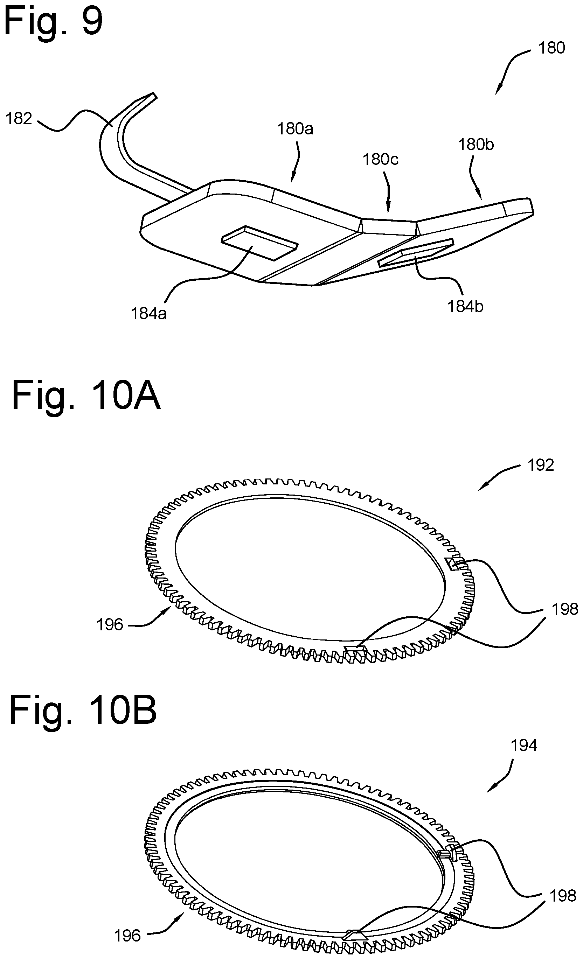

The projector lamp unit 100 as shown in Figs. 1B-1C further comprises the FPC 180 comprising, as shown in Fig. 9, a first light source 184a and a second light source 184b, and a lens system 160, as shown in Figs. 7A-7B, comprising a first projection lens 160a and a second projection lens 160b. The first light source 184a of the lens system 160 is arranged to emit light beams through an area of the first image carrier 212a and to the first projection lens 160a and the second light source 184b is arranged to emit light beams through an area of the second image carrier 212b and to the second projection lens 160b. In this way, a pattern on the image carriers 212 is projected inside the vehicle. As can be seen in, for example, Fig. 1B, an advantage of the disclosure is that due to the design of the projector lamp unit 100, one PCB 120 (and also just one FCB 180) can be used for controlling both the first light source 184a and the second light source 184b. This is advantageous, for example from packing and cost perspective.

The first image carrier 212a is movable with respect to the first light source 184a and the second image carrier 212b is movable with respect to the second light source 184b. The motor 290 is configured to cause the first image carrier 212a to move. The first image carrier 212a and the second image carrier 212b are engaged such that movement of the first image carrier 212a is transmitted to the second image carrier 212b.

In this way, the projector lamp unit 100 may be controlled based on vehicle user preferences by controlling the first image carrier 212a to move based on the vehicle user preferences.

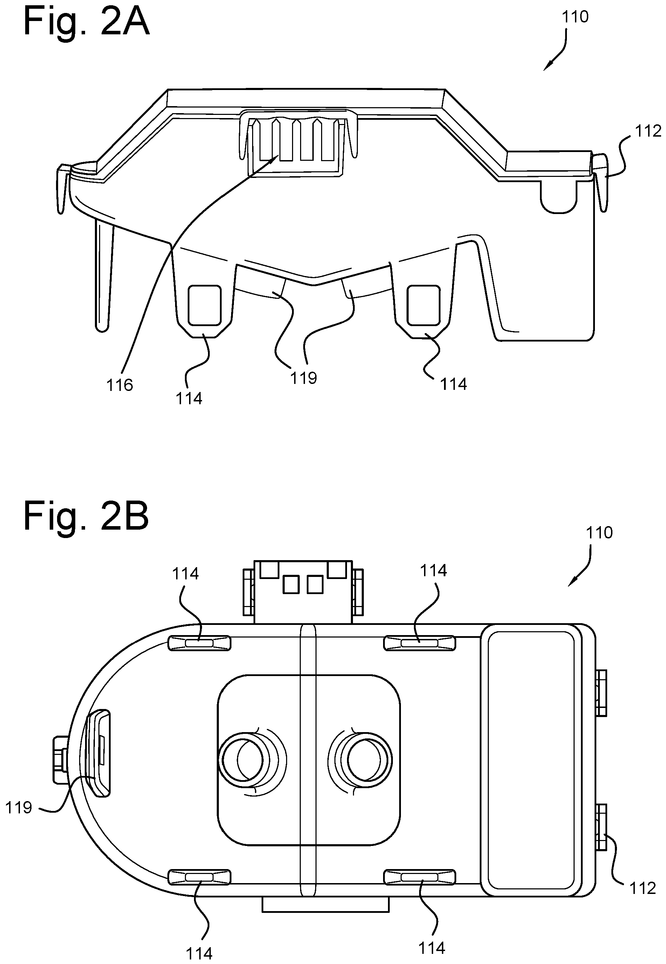

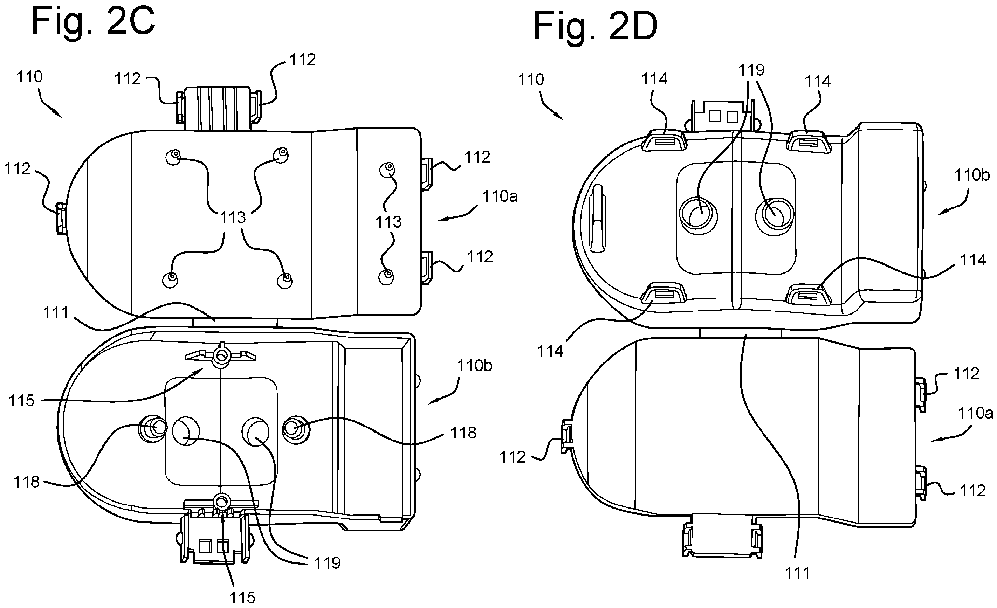

Figures 2A-2Eshow schematically several views of the housing 110 of the projector lamp unit 100. Specifically, Fig. 2A shows a front view of the housing 110 in a close state, Fig. 2B shows a lower view of the housing 110 in a close state, Fig. 2C shows an inside view of the housing 110 in an open state, and Figs. 2D-2E show an outside view of the housing 110 in an open state.

As it can be appreciated in Figs. 2C and 2D, the housing 110 comprises an upper part 110b and a lower part 110a connected by a middle part 111 acting as a hinge between the upper part 110b and the lower part 110a which allows the housing 110 to open and close such that, in a close state the upper part 110b is attached to the lower part 110a by upper clipping parts 112 in the upper part 110b which clip into corresponding protuberances 117 in the lower part 110a. The housing 110 further comprises a connector interface 116 and a first pocket 119 for accommodating the lens system 160. The housing 110 also comprises lower clipping parts 114 to connect the housing 110 to an external place where it is supposed to be installed such as, for instance, the inside roof of a vehicle, and guide structures 118 for accommodating the image carriers 212. The housing 110 also comprises 6 contact features 113 that are used for referencing the PCB 120 and the motor 290.

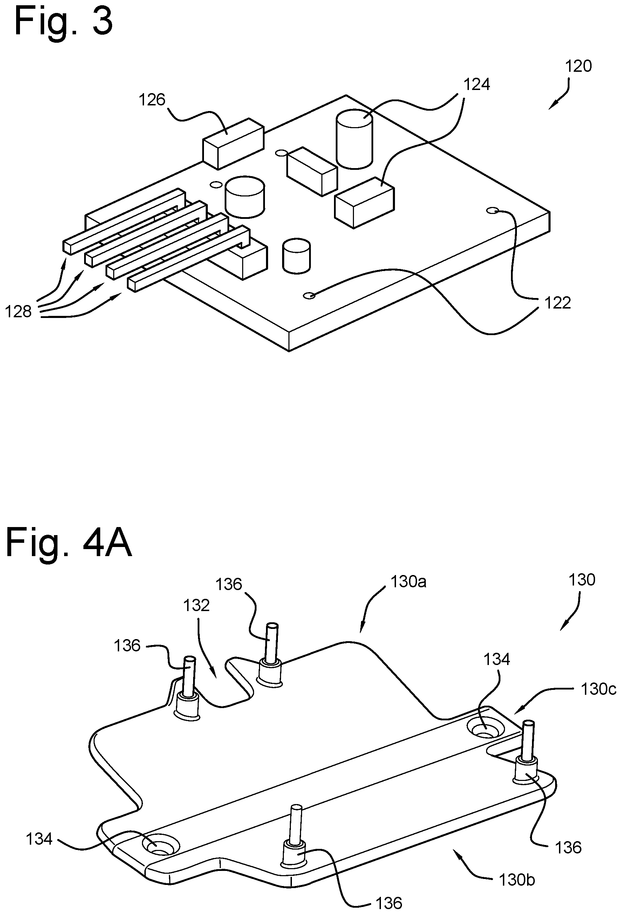

With reference to Figs. 1A, 3, 4A-4B and 9, the PCB 120 shown in Fig. 3 comprises four first openings 122 for attaching the PBC 120 to the supporting points 136 of the holder cover 130 shown in Figs. 4A-4B, electronic components 124 such as, for example, capacitors, needed for the operation of the projector lamp unit 100, a connector 126 to connect the PCB 120 to the FPC 180 shown in Fig. 9, and main connector pins 128 to connect to the connector interface 116 of the housing 110 shown in Fig. 1A.

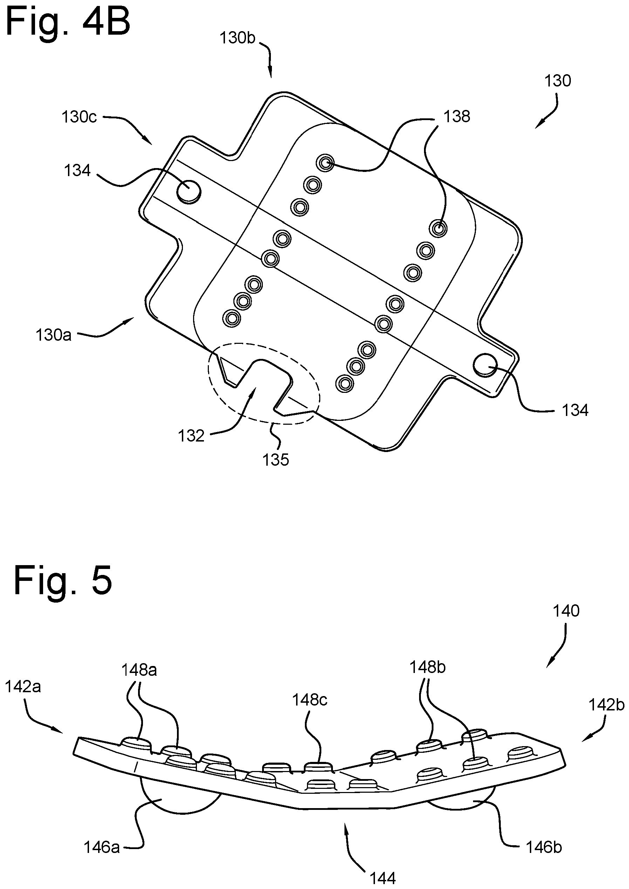

With reference to Figs. 1C, 3, 4A-4B and 9, further details of the holder cover 130 shown in Fig. 1C will be explained. The purpose of holder cover 130 is to hold the PCB 120 shown in Fig. 3, to press the FPC 180 shown in Fig. 9 against the collimator 140 shown in Fig. 5, and to enclose and reference, along with the holder 150, the collimator 140 and the FPC 180. The holder cover 130 comprises on one side a first aperture 132 for the cables 184 of the FPC 180 shown in Fig. 9, several second openings 134 for receiving screws 15 shown in Fig. 1C, and four supporting points 136 to be inserted within the four first openings 122 of the PCB 120 shown in Fig. 3. As shown in Fig. 4B, the holder cover 130 comprises on the other opposite side first contact points 138 distributed in two lines and arranged to press against the FPC 180. As it can be seen in Figs. 4A-B, the holder cover comprises a middle section 130c connecting first and second lateral sections 130a and 130b wherein the lateral sections 130a and 130 b form an angle with respect to the middle section 130c.

With respect to Figs. 1C, 3, 4A-4B and 9, further details of the flexible printed circuit (FPC) 180 shown in Fig. 1C will be in explained. As shown in Fig. 9, the flexible printed circuit 180 also comprises a middle section 180c connecting first and second lateral sections 180a and 180b such that the lateral sections can bend with respect to the middle section 180c. The FPC 180 also comprises cable 182 arranged to pass through the first aperture 132 of the holder cover 130 shown in Figs. 4A-4B and connect the FPC 180 at the connector 126 of the PBC 120 shown in Fig. 3. As shown in Fig. 9, the FPC 180 comprises further a first light source 184a on the lateral section 180a and a second light source 184b on the lateral section 180b. The first and second light sources 184 shown in Fig. 9 comprise LEDs, thought any other kind of light source may be used. Since the FPC 180 only contains the LEDs, most of the heat is produced in the rigid PCB 120, and this allows the FPC 180 to be very close to other parts of the projector lamp unit 100.

With reference to Figs. 1C, 4A-4B and 5, further details of the collimator 140 shown in Fig. 1C will be explained. As shown in Fig. 5, the collimator 140 comprises also a middle section 144 connecting first and second lateral sections 142a and 142b wherein the lateral sections 142a and 142b form an angle with respect to the middle section 144 such that the middle section 130c and the lateral sections 130a and 130b of the holder cover 130 shown in Figs. 4A-4B correspond to the middle section 144 and the lateral sections 142a and 142b of the collimator 140.

Furthermore, the collimator 140 of Fig. 5 comprises lenses 146a and 146b and second contact points 148. In this way, the FPC 180 shown in Fig. 9 is placed between the collimator 140 and the holder cover 130 shown in Figs. 4A-4B such that the second contact points 148 of the collimator 140 press the FPC 180 from below and the first contact points 138 of the holder cover 130 press the FPC 180 from above to align the lenses 146 with the light sources 184.

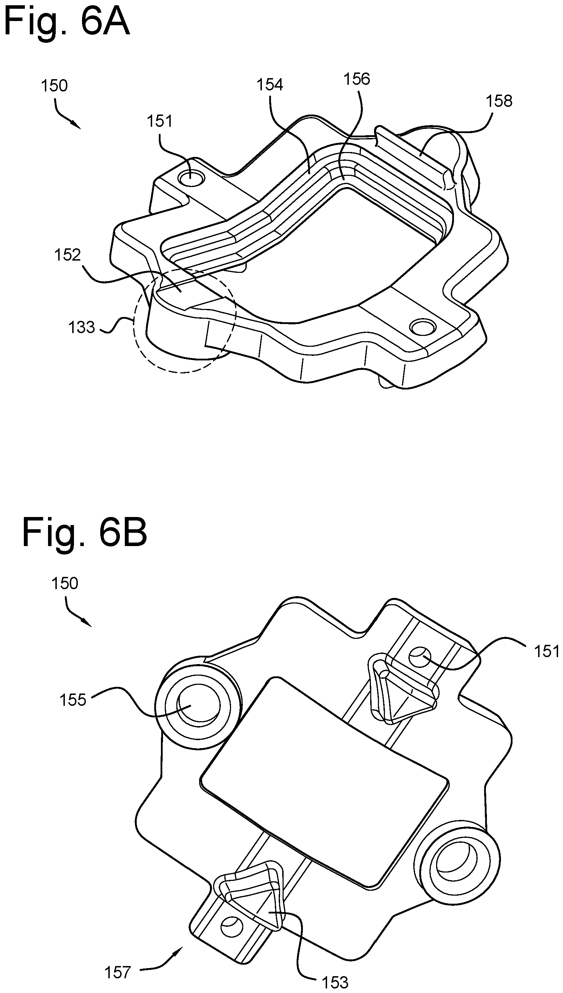

Figures 6A-6B show further details of the holder 150 shown in Fig. 1C. The purpose of the holder 150 shown in Figs. 1C and 6A-6B is to hold and reference the collimator 140 and the FPC 180, to reference the lens system 160 in a vertical direction and to prevent the first and second image carriers 212 from falling off.

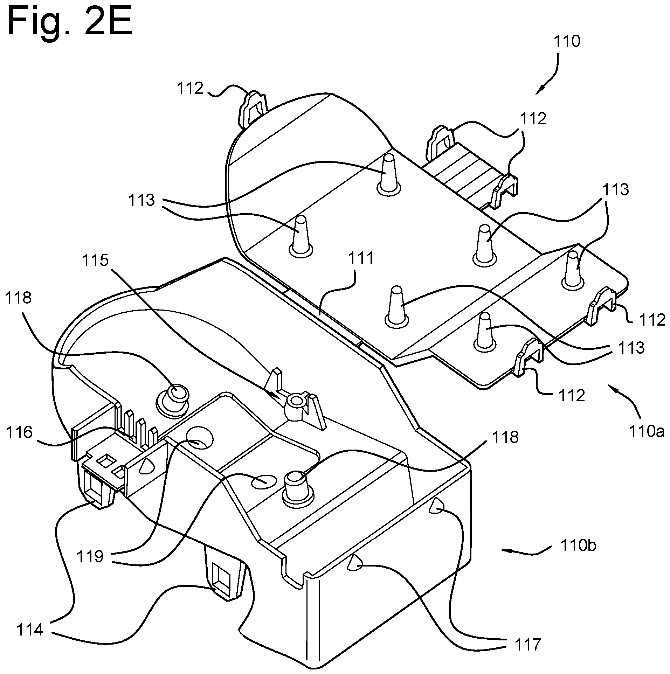

With reference to Figs. 1C, 2A , 2C, 2E, 5, 6A-6B, 7A-7B and 9, the holder 150 shown in Figs. 6A-6B comprises two third openings 151 for receiving screws 15 shown in Fig. 1C, a second aperture 152 for accommodating the cables 182 of the FPC 180 shown in Fig. 9, two second pockets 155 to couple with the guiding structures 118 of the housing 110 shown in Figs. 2C and 2E, a first poka yoke part 157 arranged to be inserted into a second poka yoke part 115 of the housing 110 shown in Figs. 2C and 2E, an inside pocket 156 to accommodate the collimator 140 shown in Fig. 5, the inside pocket 156 surrounded by an outside pocket 154 to accommodate the FPC 180 shown in Fig. 9, a third poka yoke part 158 which together with the fifth poka yoke part 136 of holder cover 130 shown in Fig. 4A ensured that the FPC 180 is placed in the correct position on the holder 150, an eighth poka yoke part 133 which together with ninth poka yoke part 135 shown in Fig. 4B ensure that the holder cover 130 is mounted in the correct position on the holder 150, and two contact surfaces 153 to fix the first and second projection lenses of the lens system 160 shown in Figs. 7A-7B. The first poka yoke part 157 of the holder 150 shown in Fig. 6B and the second poka yoke part 115 of the housing 110 shown in Fig. 2C and 2E ensure that the holder 150 is not placed upside down inside the housing 110.

Figs. 7A-B show further details of the lens system 160 shown in Fig. 1C. As said, the lens system 160 comprises a first projection lens 160a and a second projection lens 160b. The second projection lens 160b comprises a flat structure 164b with a fourth opening 162b in the middle and a cylindrical hollow structure 166b attached to the flat structure 164b at the fourth opening 162b such that light from the second light source can pass through the second projection lens 160b. In a similar way, the first projection lens 160a comprises a flat structure with a fourth opening 162a in the middle and a cylindrical hollow structure 166a attached to the flat structure at the opening such that light from the first light source can pass through the second projection lens 160a.

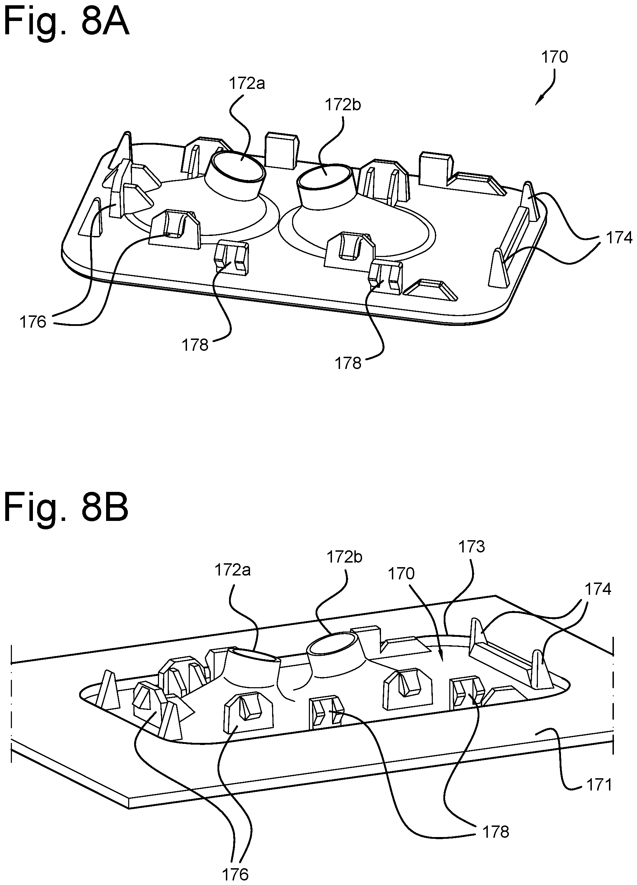

With reference to Figs. 1C, 2A-2E, 7A-7B and 8A-8B: Figs. 8A-B show further details of the roof bracket 170 shown in Fig. 1C. The purpose of the roof bracket 170 is to create a surface that is compatible with a surface of the vehicle where the projector lamp unit 100 is installed, attach the projector lamp housing 110 shown in Figs. 2A-2E, and prevent light leakages. The roof bracket 170 comprises third pockets 172a and 172b to respectively accommodate the first projection lens 160a and the second projection lens 160b shown in Figs. 7A-7B and prevent light leakages from the housing 110, first clipping features 174 and third clipping features 178 to attach the roof bracket 170 to the surface of the vehicle, and second clipping features 176 to attach the roof bracket 170 to the lower clipping parts 114 of the housing 110 shown in Figs. 2A-2E.

Figures 10A-C show further details of the image carrier supporters and the image carriers 212 shown in Fig. 1C. Fig. 10A shows the first/third gear wheel 192 of the first/third image carrier supporter 212 and Fig. 10B shows the second/fourth gear wheel 194 of the first/second image carrier supporter 212. The purpose of these parts is to hold and lock the image carriers 212, couple the two image carrier supporters, and allow rotation of the image carriers 212. The first image carrier 212a is placed between the first 192a and the second gear wheel 194a of the first carrier supporter and the second image carrier 212b is placed between the third 192b and the fourth gear wheel 194b of the second carrier supporter. The first and second gear wheels can be glued or clipped together. The gears or indentations 196 of the first and second gear wheels of one of the image carrier supporters are arranged to engage with gears or indentations 196 of the third and fourth gear wheels of the other one of the image carrier supporters and then to the motor 290 such that the motor 290 causes one image carrier supporter to rotate and said image carrier supporter causes the other image carrier supporter to rotate via gears or indentations 196. Thus, as said, the first, second, third and fourth gear wheels comprises a series of indentations in an outer surface, thereby defining a rim of teeth such that the teeth of the first 192a and second 194a gear wheels respectively engage with the teeth of the third 192b and fourth 194b gear wheels such that rotation of the first and second gear wheels cause rotation of the third and fourth gear wheels. The first/third 192 and second/fourth 194 gear wheels respectively comprise fourth poka yoke parts 198 and sixth poka yoke parts 200 to help coupling them to the image carrier 212 such that sixth poka yoke parts 200 are inserted into fourth poka yoke parts 198.

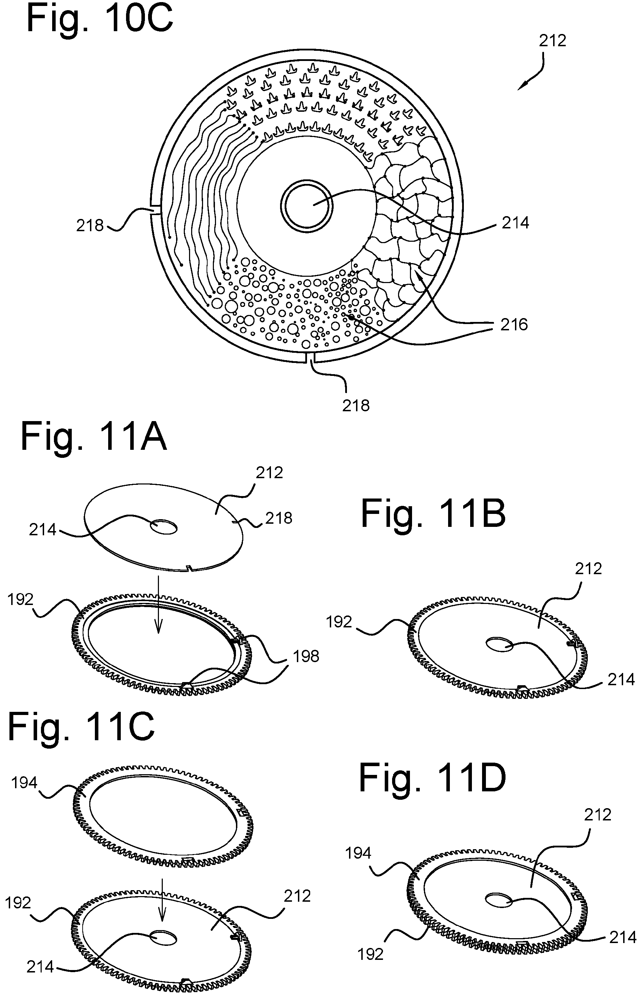

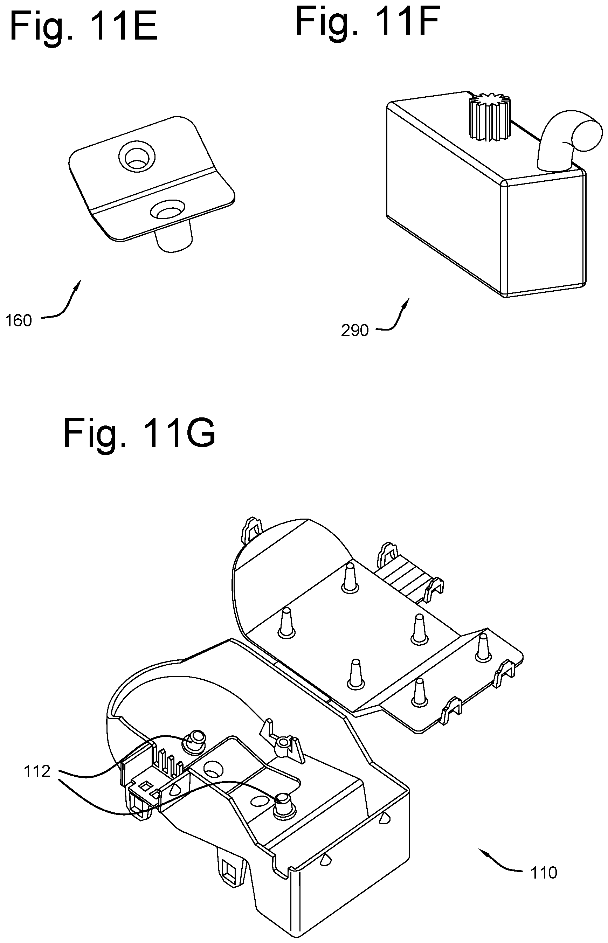

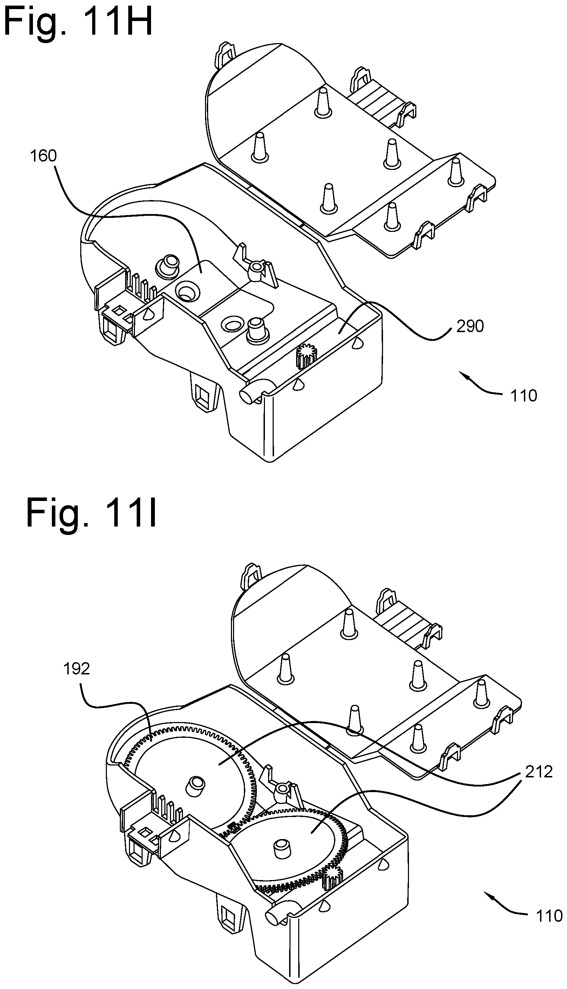

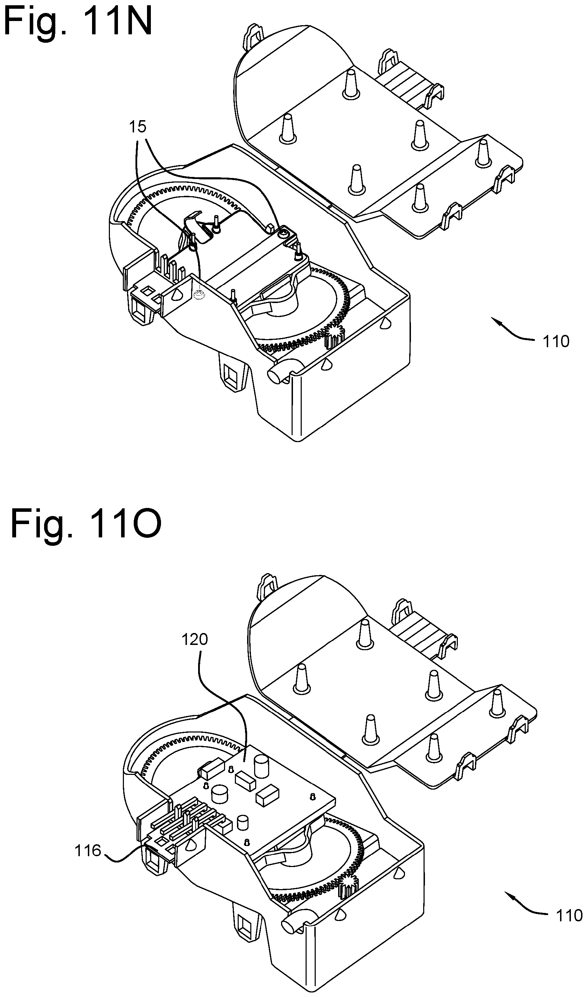

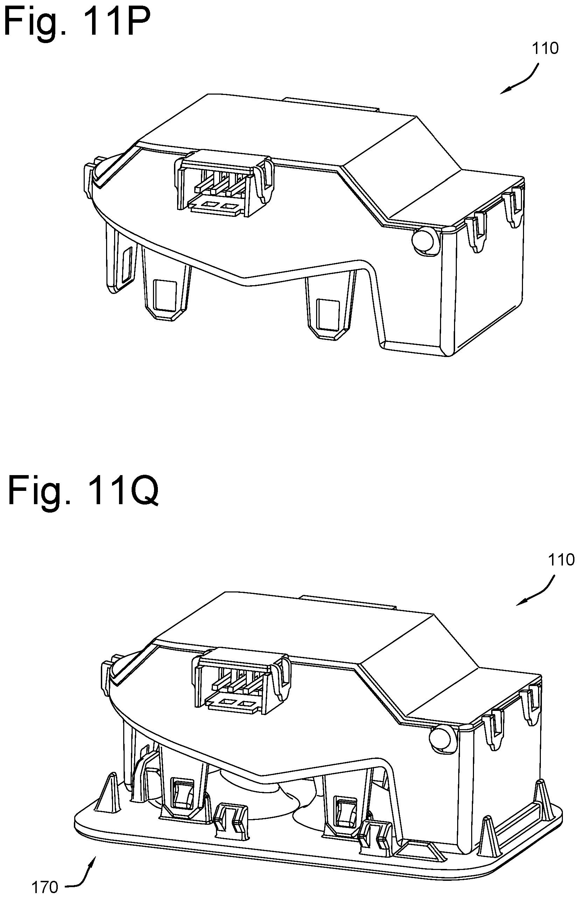

Fig. 10C shows an image carrier 212 having a circular shape divided in a plurality of areas. The image carrier 212 also comprises a hole 214 to guide rotation, seventh poka yoke parts 218 to ensure, together with fourth poka yoke parts 198 and seventh poka yoke parts 200 as shown in Figs. 10A-10B, that the first image carrier 212a is assembled between the the first gear wheel 192a and the second gear wheel 194a with the area looking into the same direction. Each of the plurality of areas corresponds to a different pattern theme, and the image carrier can be controlled to move based on the vehicle user preferences by controlling at least one of the first image carrier to rotate at the displaying speed, to rotate for the displaying time, to change a rotation direction, to control the colour of the light source 184 shown in Fig. 9 to emit the light beams based on the displaying colour or to rotate a certain amount of degrees according to the identifier of the pattern to be selected. The motor 290 shown in Figs. 1B-1C, 11F and 11H may be a servomotor or any other kind of motor and may control the 360-degree rotation.

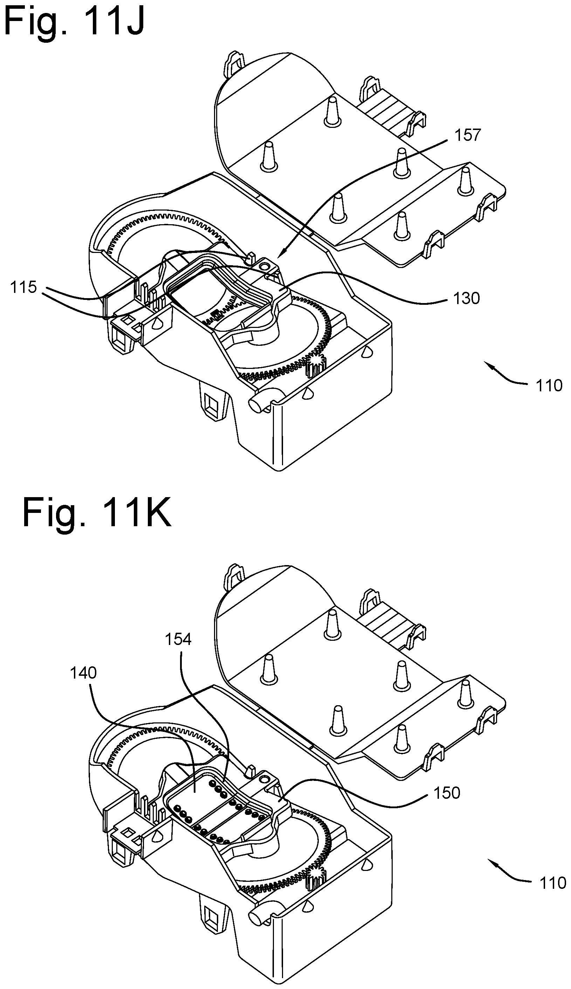

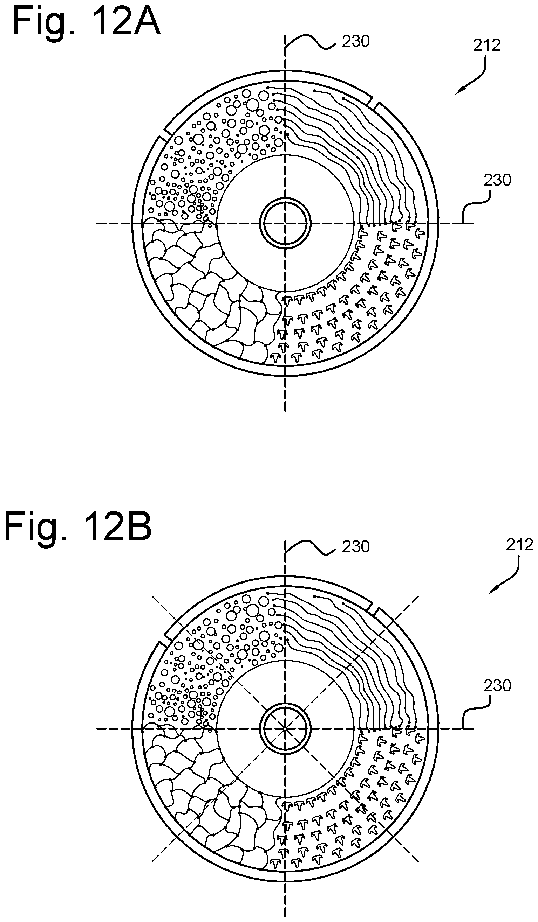

Figures 11A-11Q show how to mount the projector lamp unit 100 of Fig. 1A, and figures 12A-12D show image carriers according to embodiments of the disclosure. In Figs. 11A-11D, the image carriers 212 are mounted on the image carrier supporters (the fourth poka yoke parts 198, the sixth poka yoke parts 200 and the seventh poka yoke parts 218 ensure that both image carriers 212 are assembled in the exact same point to avoid each image carrier showing different patterns when the projector lamp is turned on), in Figs. 11E-11I, the motor 290, the lens system 160 and the carrier supporters are placed in the housing 110. In Fig. 11J, the holder cover 130 is inserted into the housing 110, and in Fig. 11K, the collimator 140 is placed on the inside pocket 156 of the holder cover 130.

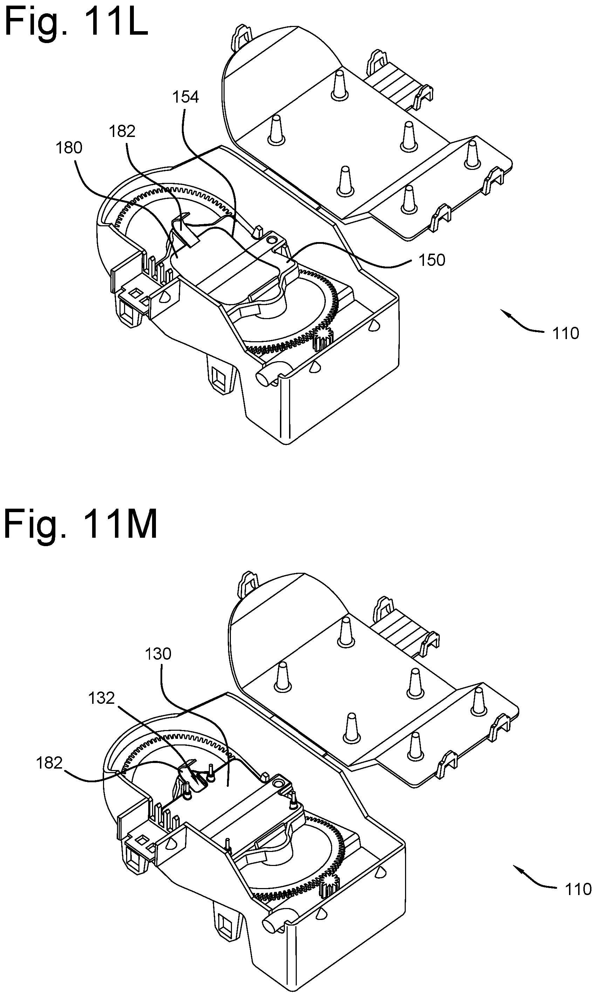

After that, in Fig. 11L, the FPC 180 is placed on the outside pocket 154 of the holder cover 130 against the collimator 140 and in Figs. 11M-11N, the holder 150 is inserted over the FPC 180 and fixed with screws 15. In Fig. 11O, the PBC 120 is fixed on the housing 110 and connected to the FPC 180. Finally, in Figs, 11P and 11Q, the housing 110 is closed and installed on the roof bracket 170.

Figs. 12A-12B shows an image carrier 212 with 4 areas define by lines 230 with different patterns, each occupying a quarter of the circle. According to the disclosure, for example, depending on the selected pattern theme, the color can be adjusted automatically or by the user, based on preferences. For example, if the user selects a "Leaves" pattern theme, a green, yellow, red, or orange color may be better. However, for a "Water" pattern theme, variations of blue color might be best.

The configuration of the pattern themes may be set up from the factory. The user may select the pattern through a user interface (for example, from the vehicle's screen or a smartphone). The projector lamp unit 100 will spot (as indicated by spot 216 in Fig. 12D) the patterns by areas and rotation angles. For example, if there are only 2 pattern themes, there would be only 2 areas, each of them in a range of 180 degrees. It is also understood that there is a limitation when it comes to the number of themes due a minimum required aperture from the LED, for example, if the amplitude of the projector lamp unit 100 is 60 degrees, the maximum number of pattern themes would be 6. Each pattern theme may be identified by a pattern identifier.

The projector lamp unit 100 may set pattern themes in the center of their respective area, i.e. for the given example shown in Fig. 12A, the motor 290 will rotate to 45 degrees for area 1, 135 degrees for area 2, 225 degrees for area 3 and 315 degrees for area 4 as shown in Figs.12C-12D. Also, the speed of rotation may be selected based on user preferences.

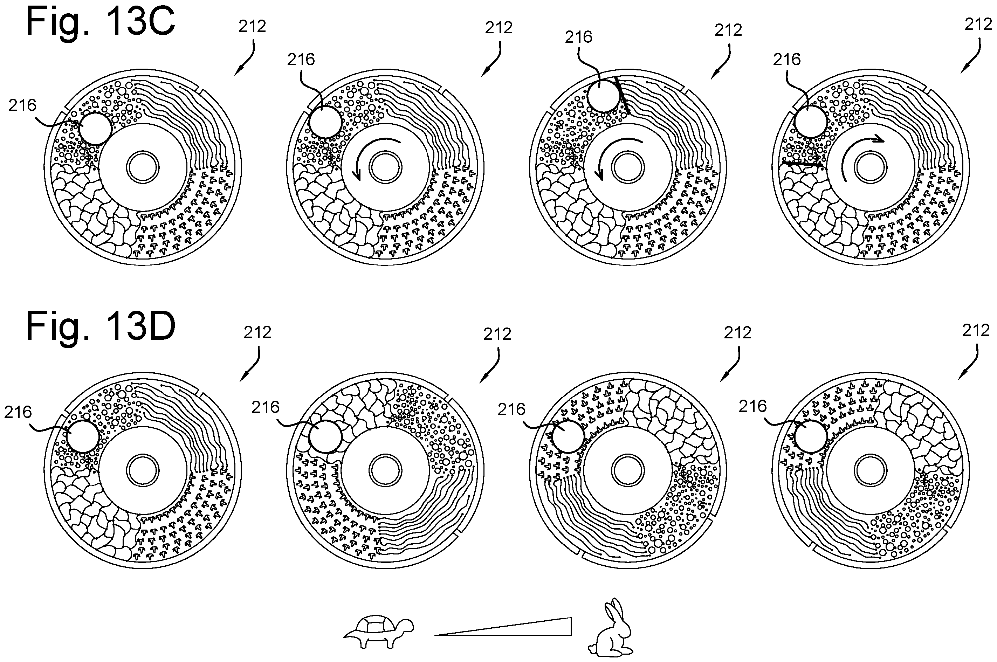

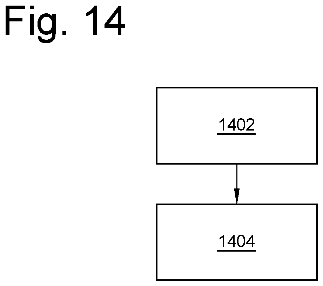

Fig. 13 shows a flowchart of a method to control a projector lamp unit to display a pattern inside of a vehicle. The method of Fig. 13 comprises a step 1402 of obtaining vehicle user preferences. After step 1402, the method proceeds to step 1404 which comprises controlling the projector lamp unit to display the pattern based on the vehicle user preferences, wherein the vehicle user preferences comprise information indicating at least one of an identifier of the pattern to be displayed, a displaying speed of the pattern to be displayed, a displaying time of the pattern to be displayed, and a displaying colour of the pattern to be displayed. Step 1402 of obtaining the vehicle user preferences may further comprise identifying a user of the vehicle, the vehicle user preferences corresponding to the identified user. For instance, the vehicle user may be identified in step 1402 based on a signal received from a mobile device. The vehicle user may be also identified in step 1402 based on an image of the user obtained from a camera inside of the vehicle. Furthermore, the vehicle user may be identified in step 1402 based on an input from the vehicle user. The vehicle may comprise a user interface such as a touch screen and the vehicle user may provide an input on the touch screen allowing identification of the vehicle user. Furthermore, the vehicle user may be identified based on a voice input, a fingerprint, or any other kind of suitable user input. Also, after identifying the vehicle user, the vehicle user preferences may be obtained through a user interface and/or from a memory.

While the present disclosure has been described with reference to exemplary embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

### REFERENCE NUMBERS

- Projector lamp unit:: 100 shown in Figs. 1A-1C
- Housing:: 110 shown in Figs. 1A, 1C, 2A-2E and 11G-11Q
- Screws:: 15 shown in Fig. 1C
- Middle part:: 111 shown in Figs. 2C-2E
- Upper clipping parts:: 112 shown in Figs. 2A-2E
- Contact features:: 113 shown in Figs. 2C and 2E
- Lower clipping parts:: 114 shown in Figs. 2A-2E
- Second poka yoke part:: 115 shown in Figs. 2C and 2E
- Connector interface:: 116 shown in Fig. 1A-1C, 2A, 2E and 11O
- Protuberances:: 117 shown in Fig. 2E
- Guide structures:: 118 shown in Figs. 2C-2D and 11G
- First pocket:: 119 shown in Figs. 2A-2E
- Printed circuit board:: 120 shown in Figs. 1B-1C, 3 and 11O
- First openings:: 122 shown in Fig. 3
- Electronic components:: 124 shown in Fig. 3
- Connector:: 126 shown in Fig. 3
- Main connector pins:: 128 shown in Fig. 3
- Holder cover:: 130 shown in Figs. 1C, 4A-4B and 11J-11L
- First aperture:: 132 shown in Figs. 4A-4B
- Second openings:: 134 shown in Figs. 4A-4B
- Supporting points/fifth poka yoke parts:: 136 shown in Fig. 4A
- First contact points:: 138 shown in Fig. 4B
- Eighth poka yoke part:: 135 shown in Fig. 4A
- Collimator:: 140 shown in Figs. 1C, 5, and 11K
- Lateral section:: 142 shown in Fig. 5
- Middle section:: 144 shown in Fig. 5
- Lenses:: 146 shown in Fig. 5
- Second contact points:: 148 shown in Fig. 5
- Holder:: 150 shown in Figs. 1B-1C, 6A-6B and 11M
- Third openings:: 151 shown in Figs. 6A-6B
- Contact surfaces:: 160 shown in Fig. 6B
- Second aperture:: 152 shown in Figs. 6A-6B
- Outside pocket:: 154 shown in Figs. 6A-6B
- Second pockets:: 155 shown in Fig. 6B
- Inside pocket:: 156 shown in Figs. 6A-6B
- First poka yoke part:: 157 shown in Fig. 6B
- Third poka yoke part:: 158 shown in Fig. 6A
- Ninth poka yoke part:: 133 shown in Fig. 6A
- Lens system:: 160 shown in Figs. 1B-1C, 7A-7B, 11E and 11H
- Fourth openings:: 162 shown in Figs. 7A-7B
- Flat structure:: 164 shown in Figs. 7A-7B
- Cylindrical hollow structure:: 166 shown in Figs. 7A-7B
- Roof bracket:: 170 shown in Figs. 1A-1C, 8A-8B and 11Q
- Third pockets:: 172 shown in Figs. 8A-8B
- First clipping features:: 174 shown in Figs. 8A-8B
- Second clipping features:: 176 shown in Figs. 8A-8B
- Third clipping features:: 178 shown in Figs. 8A-8B
- Flexible Printed Circuit:: 180 shown in Figs. 1C, 9, 11L and 11M
- Cables:: 182 shown in Fig. 1C, 9, 11L and 11M
- Light source:: 184 shown in Fig. 9
- First gear wheel:: 192a shown in Figs. 1C, 10A and 11A-11D
- Second gear wheel:: 194a shown in Figs. 1C, 10B and 11C-11D
- Third gear wheel:: 192b shown in Figs. 1C, 10A and 11A-11D
- Fourth gear wheel:: 194b shown in Figs. 1C, 10B and 11C-11D
- Indentations:: 196 shown in Figs. 10A-10B
- Fourth poka yoke part:: 198 shown in Figs. 10A and 11A
- Sixth poka yoke part:: 200 shown in Figs. 10B and 11A
- Image carrier:: 212 shown in Figs. 1C, 10C, 11A-11D, 11L, 11A-11B, 12A-12D
- Hole:: 214 shown in Fig. 10C
- Spot:: 216 shown in Figs. 12C-12D
- Seventh poka yoke part:: 218 shown in Figs. 10C and 11A-11D
- Lines:: 230 shown in Figs. 12A-12B
- Motor:: 290 shown in Figs. 1B-1C, 11F and 11H

## Claims

1. A method to control a projector lamp unit (100) to display a pattern inside of a vehicle, the method comprising:
- Obtaining (1402) vehicle user preferences; and
- Controlling (1404) the projector lamp unit to display the pattern based on the vehicle user preferences;
wherein the vehicle user preferences comprise information indicating at least one of an identifier of the pattern to be displayed, a displaying speed of the pattern to be displayed, a displaying time of the pattern to be displayed, and a displaying colour of the pattern to be displayed.

2. The method according to claim 1, wherein obtaining (1402) the vehicle user preferences comprises identifying a user of the vehicle and wherein the vehicle user preferences correspond to the identified user.

3. The method according to claim 2, wherein the vehicle user is identified based on a signal received from a mobile device and/or based on an image of the user obtained from a camera inside of the vehicle and/or based on an input from the vehicle user.

4. The method according to any of the previous claims, wherein the vehicle user preferences are obtained through a user interface and/or from a memory.

5. The method according to any of the preceding claims, wherein the projector lamp unit (100) comprises a first light source, a first image carrier, and a first projection lens, wherein the first light source is arranged to emit light beams through an area of the first image carrier and to the first projection lens whereby the pattern inside the vehicle is projected, wherein the first image carrier is movable with respect to the first light source and wherein controlling the projector lamp unit based on the vehicle user preferences comprises controlling the first image carrier to move based on the vehicle user preferences.

6. The method according to claim 5, wherein the projector lamp unit (100) comprises a second light source, a second image carrier, and a second projection lens, wherein the second light source is arranged to emit light beams through an area of the second image carrier and to the second projection lens whereby the pattern inside the vehicle is projected, wherein the second image carrier is movable with respect to the second light source, wherein the first image carrier and the second image carrier are engaged such that movement of the first image carrier is transmitted to the second image carrier.

7. The method according to any of claims 5-7 wherein the projector lamp unit (100) further comprises a motor and wherein controlling the first image carrier to move comprises controlling the motor to cause the first image carrier to move.

8. The method according to claim 5, wherein the first image carrier (212a) has a circular shape divided in a plurality of areas and each of the plurality of areas corresponds to a different pattern theme, and wherein controlling the first image carrier (212a) to move based on the vehicle user preferences comprises at least one of controlling the first image carrier (212a) to rotate at the displaying speed, to rotate for the displaying time, to change a rotation direction, to control the colour of the first light source to emit the light beams based on the displaying colour or to rotate a certain amount of degrees according to the identifier of the pattern to be selected.

9. A control unit for a vehicle, the control unit configured to:
- Obtain user preferences; and
- control a projector lamp unit to display a pattern inside of the vehicle based on the vehicle user preferences;
wherein the vehicle user preferences comprise information indicating at least one of an identifier of the pattern to be displayed, a displaying speed of the pattern to be displayed, a displaying time of the pattern to be displayed, and a displaying colour of the pattern to be displayed.

10. The control unit according to claim 8 further configured to perform any of the operations of claims 2-8.

11. A projector lamp unit (100) for a vehicle interior comprising:
a first light source (184a),
a first image carrier (212a),
a first projection lens (160a), wherein the first light source is arranged to emit light beams through an area of the first image carrier and to the first projection lens whereby the pattern inside the vehicle is projected,
a motor (290) arranged to move at least one of the first light source and the first image carrier such that light beams from the first light source pass through the area of the first image carrier, and
a control unit according to any of claims 9-10.

12. The projector lamp unit (100) according to claim 11, further comprising a second light source, a second image carrier, and a second projection lens, wherein the second light source is arranged to emit light beams through an area of the second image carrier and to the second projection lens whereby the pattern inside the vehicle is projected, wherein the second image carrier is movable with respect to the second light source, wherein the first image carrier and the second image carrier are engaged such that movement of the first image carrier is transmitted to the second image carrier.

13. The projector lamp unit (100) according to claim 12, further comprising first and second image carrier supporters,
the first image carrier supporter comprising a first (192a) and a second gear wheel (194a) with the first image carrier being enclosed between the first and the second gear wheels, the second image carrier supporter comprising a third (192b) and a fourth gear wheel (194b) with the second image carrier being enclosed between the third and the fourth gear wheels, and
wherein each of the first, second, third and fourth gear wheel comprises a series of indentations in an outer surface, thereby defining a rim of teeth such that the teeth of the first and second gear wheels respectively engage with the teeth of the third and fourth gear wheels such that rotation of the first and second gear wheels cause rotation of the third and fourth gear wheels.

14. A vehicle comprising a projector lamp unit (100) according to any of claims 11-13.
